# EUROPEAN PATENT SPECIFICATION

(11) **EP 3 159 196 B1**
(45) Date of publication and mention of the grant of the patent: **17.06.2020**
(21) Application number: 16176576.3
(22) Date of filing: 28.06.2016
(51) Int. Cl.: B60G 17/052

(54) **VEHICLE SUSPENSION SYSTEM**
FAHRZEUGAUFHÄNGUNGSSYSTEM
SYSTÈME DE SUSPENSION DE VÉHICULE

(30) Priority: 08.07.2015 GB 201511973
(43) Date of publication of application: 26.04.2017
(73) Proprietor: Haldex Brake Products AB, 261 24 Landskrona (SE)
(72) Inventor: HARRISON, Dudley, John, Solihull, West Midlands B90 4YP (GB)
(74) Representative: Johnson, Emma Elizabeth

(56) References cited:
- EP-A1- 2 757 006
- DE-B3-102005 017 590
- DE-C1- 4 120 824

## Description

The present invention relates to a vehicle suspension system, particularly to an air suspension system which may be used in the trailer of an articulated heavy goods vehicle.

It is known to provide vehicles such as trailers or semi-trailers of heavy goods vehicles with a pneumatic suspension system in which the trailer body may be raised or lowered relative to the chassis by means of the supply or release of compressed air to / from a plurality of suspension bellows. The trailer is typically provided with a manually operable lever which is movable between a raise position, a lower position and a drive position. This lever is mechanically connected to a raise/lower valve which controls the supply of compressed air to the suspension bellows. The raise/lower valve is configured such that when the lever is in the raise position, the suspension bellows are directly connected to a compressed air reservoir, when the lever is in the lower position, the suspension bellows are vented to atmosphere, and when the lever is in the drive position, the suspension bellows are connected to a compressed air reservoir via a levelling valve or an electrically operated suspension valve assembly.

The electrically operated suspension valve assembly facilitates the automatic operation of the air suspension system, and typically includes two solenoid operated valves - a fill valve and an isolation valve. It is known to use an electronic control unit of the trailer braking system (either the anti-lock braking system (ABS) or electronic braking system (EBS) control unit) to control the electrically operated suspension valve assembly.

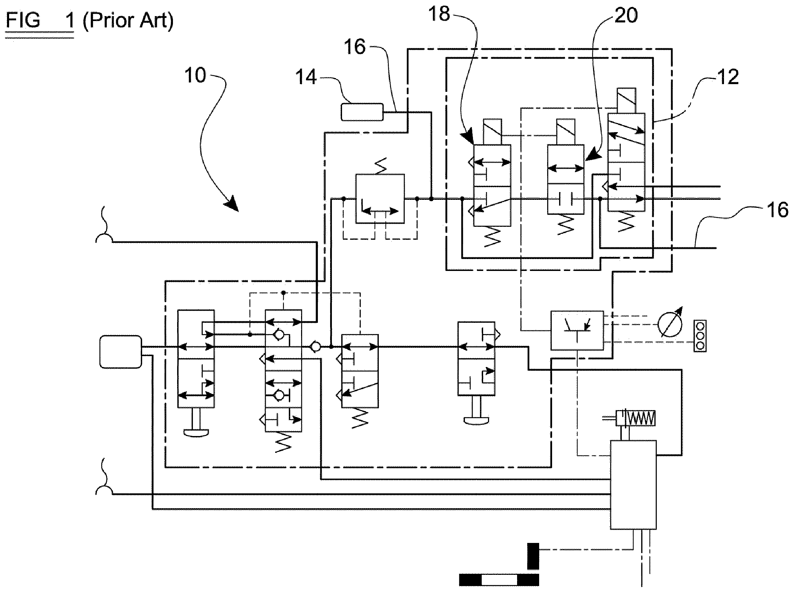

An example of a trailer braking system including such a suspension valve assembly is described in EP2757006. Figure 1 is a schematic illustration of the trailer braking system 10 described in this document, with the suspension valve assembly labelled with reference numeral 12. This system includes a supply line 16 which extends from a compressed air reservoir 14 to the air suspension bellows (not shown in Figure 1) via the raise / lower valve (not shown in Figure 1) and the suspension valve assembly 12, the suspension valve assembly 12 being located between the compressed air reservoir 14 and the raise/lower valve. The suspension valve assembly 12 comprises a fill valve 18 and an isolation valve 20. Both are solenoid operated valves.

In this example, the fill valve 18 has an exhaust port which vents to the atmosphere, an inlet port which is connected to the compressed air reservoir 14, and an outlet port which is connected to an inlet port of the isolation valve 20. The fill valve 18 is movable between a fill position in which the inlet port is connected to the outlet port whilst the exhaust port is closed, and an exhaust position in which the outlet port is connected to the exhaust port an and the inlet port is closed. A resilient biasing element biases the fill valve 18 into the exhaust position, and the fill valve 18 moves from the exhaust position to the fill position by the supply of electrical power to its solenoid operated actuator.

The isolation valve 20 has an inlet port which is connected to the outlet port of the fill valve 18, and an outlet port which is connected to the supply line 16. The isolation valve 20 is movable between an energised position in which the inlet port is connected to the outlet port, and a stop position in which the inlet port and outlet port are both closed. A resilient biasing element biases the isolation valve 20 into the stop position, and the isolation valve 20 moves from the stop position to the energised position by the supply of electrical power to its solenoid operated actuator.

Thus, in the absence of the supply of electrical power to either the fill valve 18 or the isolation valve 20, the supply line 16 is closed by the isolation valve 20, and the pressure in the suspension bellows is maintained.

In order to release pressure from the suspension bellows, to lower the suspension, electrical power is supplied to the isolation valve 20 so that the isolation valve 20 moves to the energised position in which its inlet port is connected to its outlet port. As a result, the supply line 16 is connected to the atmosphere at the fill valve 18.

In order to supply pressure to the suspension bellows, to raise the suspension, electrical power is supplied to the isolation valve 20 so that the isolation valve 20 moves to its energised position in which its inlet port is connected to its outlet port, and also the fill valve 18 so that the fill valve 18 moves to its fill position in which its inlet port is connected to its outlet port. As a result, the supply line 16 is connected to the compressed air reservoir 14.

A problem would arise with the automatic, electrically controlled, operation of the suspension whilst the vehicle is moving, if the raise / lower valve (which, obviously, is intended only for use whilst the vehicle is stationary) is not returned the drive position before the vehicle starts moving. If this occurs, in the arrangement described above, the supply of electrical power to the fill valve 18 and isolation valve 20 will not be effective in either exhausting or filling the suspension bellows as the connection of the suspension bellows to the suspension valve assembly 12 is broken at the raise/lower valve. As such, it is known to provide the raise/lower valve with a "deadman" function, i.e. a mechanism, typically a spring, for returning the raise/lower valve to the drive position as soon as the lever is released by an operator.

DE102005017590 relates to a switching valve for systems with a level control valve for keeping a constant height of a structure of an air-suspended motor vehicle. DE4120824 relates to a pneumatic switching valve for systems for lifting and lowering a vehicle body of vehicles with air suspension.

The invention relates to an alternative solution to this problem.

According to a first aspect of the invention we provide a vehicle suspension system comprising at least one suspension bellows, a source of pressurised fluid, a supply line which extends between the suspension bellows and the source of pressurised fluid via a raise/lower valve, and a manually operable operating member which is movable between a raise position, a lower position and a drive position, the operating member being connected to the raise/lower valve which is configured such that when the operating member is moved to the raise position, the raise/lower valve moves to a raise position in which the suspension bellows are directly connected to the reservoir of pressurised fluid, when the operating member is moved to the lower position, the raiser/lower valve moves to a lower position in which suspension bellows are vented to atmosphere, and when the operating member is moved to the drive position, the raise/lower valve moves to a drive position in which the suspension bellows are connected to the or a further source of pressurised fluid via an electrically operated suspension valve assembly, wherein the raise/lower valve is further provided with a fluid pressure operated actuator which moves the raise/lower valve to the drive position when pressurised fluid is supplied to the actuator, and a pilot pressure line by means of which pressurised fluid is supplied to the actuator and characterised in that the pilot pressure line is connected to a pilot line source of pressurised fluid, which is one of the source of pressurised fluid or the further source of pressurised fluid or a further alternative source of pressurised fluid, via the suspension valve assembly, the suspension valve assembly being operable to control flow of fluid from the pilot line source of pressurised fluid into the pilot pressure line.

The operating member may be a lever.

The pressurised fluid may be compressed air.

The source of pressurised fluid may be a compressed air reservoir.

The operating member may also be movable into a lock position, in which the raise/lower valve is in a locked position in which it blocks the supply line.

The raise/lower valve may have an inlet port which is connected to the source of pressurised fluid via the supply line, an outlet port which is connected to the suspension bellows via the supply line, an exhaust port which vents to a low pressure region, typically the atmosphere, and a drive port which is connected to the suspension valve assembly via a drive control line. In this case, the raise/lower valve includes a movable valve member assembly which, when the raise/lower valve is in the raise position, connects the inlet port to the outlet port, and closes the exhaust port and drive port, when the raise/lower valve is in the lower position, connects the outlet port to the exhaust port and closes the inlet port and drive port, when the raise/lower valve in the drive position connects the outlet port to the drive port and closes the exhaust port and inlet port.

Where the operating member has a lock position, the raise/lower valve, when in the lock position, preferably closes the inlet, outlet, exhaust and drive ports.

The system may further include an electronic control unit which is connected to the suspension valve assembly so that operation of the suspension valve assembly may be controlled by the electronic control unit.

The electronic control unit may be an electronic control unit of a vehicle braking system (either the anti-lock braking system (ABS) or electronic braking system (EBS) control unit).

The suspension valve assembly may be connected to the source of pressurised fluid via the supply line using a branch line off the supply line which extends between a point in the supply line between the source of pressurised fluid and the raise/lower valve. Alternatively, the suspension valve assembly may be connected to a different source of pressurised fluid.

The suspension valve assembly may be connected to the raise/lower valve via a drive control line. The suspension valve assembly is advantageously configured so that in a rest position the connection between the or the further source of pressurised fluid and the drive control line is blocked, moves on receipt of a first electrical operating signal to a lower position in which the drive control line is vented to atmosphere, and moves on receipt of a second electrical operating signal to a raise position in which the drive control line is connected to the or the further source of pressurised fluid. In this case, where the pilot pressure line is connected to the suspension valve assembly, the suspension valve assembly is advantageously configured, on receipt of a third electrical operating signal, to move a reset position in which the pilot pressure line is connected to a source of pressurised fluid.

The suspension valve assembly may include two electrically operated valves - a fill valve and an isolation valve. These valves may include a solenoid operated actuator.

The fill valve may have an exhaust port which vents to the atmosphere, an inlet port which is connected to the or the further source of pressurised fluid, and an outlet port which is connected to an inlet port of the exhaust valve. In this case, the fill valve is preferably movable between a fill position in which the inlet port is connected to the outlet port whilst the exhaust port is closed, and an exhaust position in which the outlet port is connected to the exhaust port an and the inlet port is closed. The fill valve may be provided with a resilient biasing element which biases the fill valve into the exhaust position, and the fill valve moving from the exhaust position to the fill position by the supply of electrical power to the fill valve.

The isolation valve may have an inlet port which is connected to the outlet port of the fill valve, and an outlet port which is connected to the drive control line. In this case, the isolation valve is advantageously movable between an energised position in which the inlet port is connected to the outlet port, and a stop position in which the inlet port and outlet port are both closed. The isolation valve may be provided with a resilient biasing element which biases the isolation valve into the stop position, and the isolation valve moving from the stop position to the energised position by the supply of electrical power to the isolation valve.

The pilot pressure line may be connected to the line extending between an outlet port of the fill valve and an inlet port of the isolation valve.

An embodiment of the invention will now be described, by way of example only, with reference to the following figures,
FIGURE 2 shows a schematic illustration of a vehicle suspension system according to the invention,
FIGURE 3 shows a schematic illustration of the prior art vehicle braking system illustrated in Figure 1 integrated with a vehicle suspension system according to the invention.

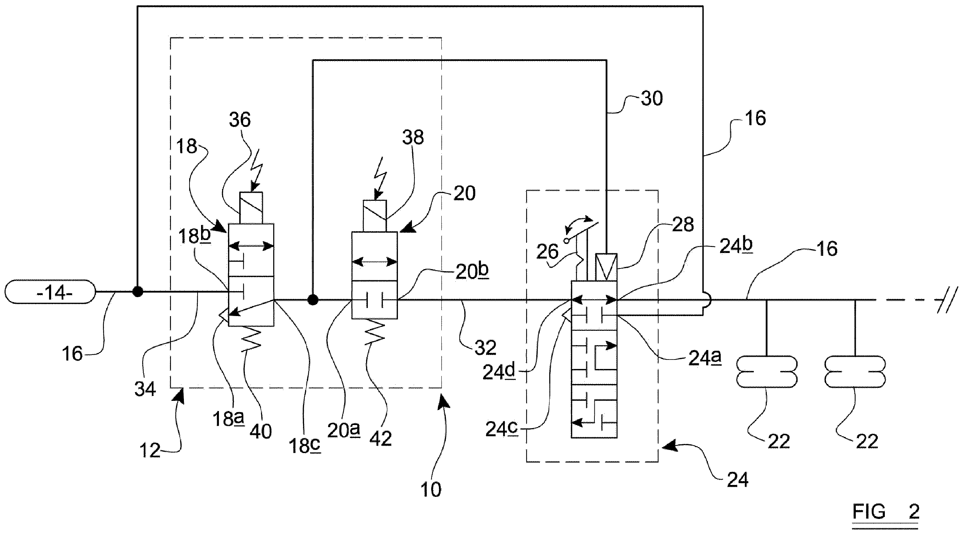

Referring now to Figure 2, there is shown a vehicle suspension system 10 typically a suspension system for a trailer or semi-trailer of a heavy goods vehicle. The suspension system comprises a plurality of suspension bellows 22, a source of pressurised fluid 14, which, in this example comprises a compressed air reservoir, a supply line 16 which extends between the suspension bellows 22 and the reservoir 14 via a raise/lower valve 24, and an electrically operated suspension valve assembly 12. The raise/lower valve 24 is provided with a manually operable operating member 26, which in this example is a lever. The lever 26 is movable between a raise position, a lower position and a drive position, and is connected (typically mechanically) to a movable valve member. The raise/lower valve 24 is configured such that when the lever 26 is moved to the raise position, the raise/lower valve 24 moves to a raise position in which the suspension bellows 22 are directly connected to the reservoir 14, when the lever 26 is moved to the lower position, the raiser/lower valve 24 moves to a lower position in which suspension bellows 22 are vented to a lower pressure region (typically atmosphere), and when the lever 26 is moved to the drive position, the raise/lower valve 24 moves to a drive position in which the suspension bellows 22 are connected to the reservoir 14 via the suspension valve assembly 12. The raise/lower valve 24 is further provided with a fluid pressure operated actuator 28 which moves the raise/lower valve 24 to the drive position when pressurised fluid is supplied to the actuator 28, and a pilot pressure line 30 by means of which pressurised fluid is supplied to the actuator 28.

The raise/lower valve 24 has an inlet port 24a which is connected directly to the reservoir 14 via the supply line 16, an outlet port 24b which is connected to the suspension bellows 22 via the supply line 16, an exhaust port 24c which vents to a low pressure region (typically the atmosphere), and a drive port 24d which is connected to the suspension valve assembly 12 via a drive control line 32. In this example, the raise/lower valve 24 includes a movable valve member assembly which, when the raise/lower valve 24 is in the raise position, connects the inlet port 24a to the outlet port 24b, and closes the exhaust port 24c and drive port 24d, when the raise/lower valve 24 is in the lower position, connects the outlet port 24b to the exhaust port 24c and closes the inlet port 24a and drive port 24d, when the raise/lower valve 24 is in the drive position connects the outlet port 24b to the drive port 24d and closes the exhaust port 24c and inlet port 24a.

The system further includes an electronic control unit (ECU - not shown) which is connected to the suspension valve assembly 12 so that operation of the suspension valve assembly 12 may be controlled by the electronic control unit. The electronic control unit may be an electronic control unit of a vehicle braking system (either the anti-lock braking system (ABS) or electronic braking system (EBS) control unit).

In this example, the suspension valve assembly is connected to the reservoir 14 via the supply line 16 and a branch line 34 off the supply line 16 which extends between a point in the supply line 16 between the reservoir 14 and the raise/lower valve 24. It is possible, however, for the suspension valve assembly to be connected to a completely separate source of pressurised fluid.

The suspension valve assembly 12 is configured so that in a rest position the drive control line 32 is blocked, it moves on receipt of a first electrical operating signal to a lower position in which the drive control line 32 is vented to atmosphere, and moves on receipt of a second electrical operating signal to a raise position in which the drive control line 32 is connected to the reservoir 14. The pilot pressure line 30 is connected to the suspension valve assembly 12, and the suspension valve 12 assembly is also configured such that, on receipt of a third electrical operating signal, it moves to a reset position in which the pilot pressure line 30 is connected to the reservoir, whilst the connection between the drive control line 32 and reservoir 14 is blocked.

In this embodiment, the suspension valve assembly 12 includes two electrically operated valves - a fill valve 18 and an isolation valve 20. These valves 18, 20 both include a solenoid operated actuator 36, 38.

The fill valve 18 has an exhaust port 18a which vents to the atmosphere, an inlet port 18b which is connected to the reservoir 14, and an outlet port 18c which is connected to an inlet port 20a of the isolation valve 20. The fill valve 18 is movable between a fill position in which the inlet port 18b is connected to the outlet port 18c whilst the exhaust port 18a is closed, and an exhaust position in which the outlet port 18c is connected to the exhaust port 18a and the inlet port 18b is closed. The fill valve 18 is also provided with a resilient biasing element 40 (typically a spring) which biases the fill valve 18 into the exhaust position, and the fill valve 18 moves from the exhaust position to the fill position by the supply of electrical power to its solenoid operated actuator 36.

The isolation valve 20 has an inlet port 20a which is connected to the outlet port 18c of the fill valve 18, and an outlet port 20b which is connected to the drive control line 32. In this case, the isolation valve 20 is movable between an energised position in which the inlet port 20a is connected to the outlet port 20b, and a stop position in which the inlet port 20a and outlet port 20b are both closed. The isolation valve 20 is also provided with a resilient biasing element 42 (typically a spring) which biases the isolation valve 20 into the stop position, the isolation valve 20 moving from the stop position to the energised position by the supply of electrical power to its solenoid operated actuator 38.

The pilot pressure line 30 is connected to the line extending between the outlet port 18c of the fill valve 18 and the inlet port 20a of the exhaust valve 20.

The suspension system 10 may be operated as follows.

The suspension system 10 is shown in Figure 2 in its default position which the lever 26 has been operated to move the raise/lower valve 24 to the drive position, whilst no electrical power is supplied to the suspension valve assembly, which, as a result, is in its rest position in which the connection between the drive control line 32 is blocked. If an operator requires the vehicle body to be raised whilst the vehicle is stationary, the operator moves the lever 26 into the raise position. This connects the inlet port 24a of the raise/lower valve 24 to the outlet port 24b, thus opening the supply line 16 and allowing flow of compressed air from the reservoir 14 to the suspension bellows 22. If the operator requires the vehicle body to be lowered whilst the vehicle is stationary, the operator moves the lever 26 to the lower position. This connects the outlet port 24b of the raise /lower valve 24 to its exhaust port 24c, and closes the inlet port 24a, thus closing the supply line 16a upstream of the raise/lower valve 24 and connecting the suspension bellows 22 to the atmosphere.

Before the vehicle is driven, the operator should return the lever 26 to the drive position, in which the outlet port 24b of the raise/lower valve 24 is connected to the drive control line 32. If, the operator fails to do this, the raise/lower valve 24 can be returned to the drive position automatically, powering the solenoid operated actuator of the fill valve 18, whilst leaving the isolation valve 20 actuator without electrical power. This moves the fill valve 18 to its fill position, in which its inlet port 18b is connected to its outlet port 18c. As a result, the pilot pressure line 30 is connected to the reservoir 14, and the fluid pressure operated actuator 28 of the raise/lower valve 24 returns the raise/lower valve 24 to the drive position.

Once the raise/lower valve 24 is in the drive position, electrically controlled operation of the suspension system is possible. To raise the vehicle body, electrical power is supplied to the solenoid operated actuator 36 of the fill valve 18, and then the solenoid operated actuator 38 of the isolation valve 20. The drive control line 32 is thus connected to the reservoir 14, and pressurised fluid supplied to the suspension bellows 22 via the drive control line 32, raise/lower valve 24 and supply line 16. To hold the suspension at a given level, both valves are unpowered. To lower the vehicle body, electrical power is supplied to the isolation valve 20 whilst the fill valve 18 remains unpowered - this causes the drive control line 32 to be vented to atmosphere at the fill valve 18.

Providing the raise/lower valve 24 with a fluid pressure operated actuator 28 which moves the raise/lower valve 24 to the drive position on the supply of pressurised fluid to the actuator 28 via a pilot pressure line 30, and connecting the pilot pressure line 30 to the existing suspension valve assembly 12 provides means for resetting the raise/lower valve 24 automatically with minimal additional hardware.

The ECU may be programmed to carry out the electrical reset of the raise/lower valve to the drive position described above, automatically whenever the vehicle moves from a stationary condition. Alternatively, it may be programmed to carry out this electrical reset when electrical adjustment of the suspension height is required and allowed for the first time after the vehicle moves from a stationary condition. In this case, the reset need only be carried out if the adjustment required is to lower the suspension.

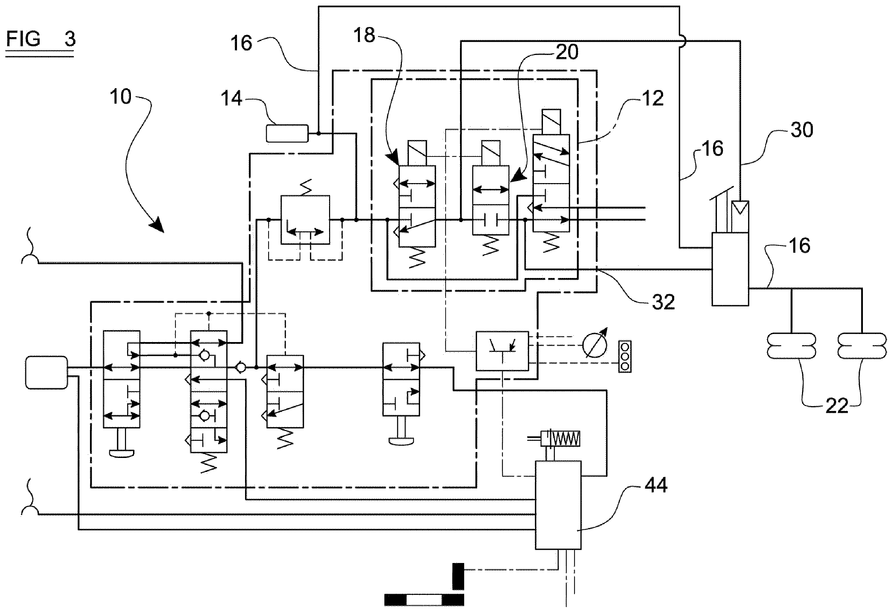

Referring now to Figure 3, there is shown the trailer braking and suspension control system described in EP2757006, and illustrated in Figure 1, integrated with the suspension system according to the invention and illustrated in Figure 2. In this case, the operation of the fill valve 12 and exhaust valve 18 may be controlled by the main trailer braking ECU 44.

Various modifications may be made to the suspension system within the scope of the invention.

For example, the operating member 26 need not be a lever - it could comprise a button, dial, pedal or any other suitable manually operable device. Moreover, the connection between the operating member and the raise/lower valve assembly need not be mechanical. For example, a hydraulic or electrical connection could be used to link the manual operation of the operating member with the position of the raise/lower valve.

Whilst, typically, the invention would be employed in a pneumatic suspension system, this need not be the case, and a gas other than air or a hydraulic fluid might be used to raise or lower the suspension.

The operating member 26 may also be movable into a lock position, in which the raise/lower valve is in a locked position in which it blocks both the supply line and the drive control line. Where the operating member 26 has a lock position, the raise/lower valve 24, when in the lock position, preferably closes the inlet port 24a, outlet port 24c, exhaust port 24c and drive port 24d.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A vehicle suspension system (10) comprising:
at least one suspension bellows (22),
a source of pressurised fluid (14),
a supply line (16) which extends between the suspension bellows and the source of pressurised fluid (14) via a raise/lower valve (24), and
a manually operable operating member (26) which is movable between a raise position, a lower position and a drive position,
the operating member (26) being connected to the raise/lower valve (24) which is configured such that when the operating member (26) is moved to the raise position, the raise/lower valve (24) moves to a raise position in which the suspension bellows (22) are directly connected to the source of pressurised fluid (14),
when the operating member (26) is moved to the lower position, the raise/lower valve (24) moves to a lower position in which suspension bellows (22) are vented to a low pressure region, and
when the operating member (26) is moved to the drive position, the raise/lower valve (24) moves to a drive position in which the suspension bellows (22) are connected to the or a further source of pressurised fluid (14) via an electrically operated suspension valve assembly (12),
wherein the raise/lower valve (24) is further provided with a fluid pressure operated actuator (28) which moves the raise/lower valve (24) to the drive position when pressurised fluid is supplied to the actuator (28), and
a pilot pressure line (30) by means of which pressurised fluid is supplied to the actuator (28) and **characterised in that** the pilot pressure line (30) is connected to a pilot line source of pressurised fluid, which is one of the source of pressurised fluid (14) or the further source of pressurised fluid or a further alternative source of pressurised fluid, via the suspension valve assembly (12), the suspension valve assembly (12) being operable to control flow of fluid from the pilot line source of pressurised fluid into the pilot pressure line (30).

2. A vehicle suspension system (10) according to claim 1 wherein the operating member (26) is also movable into a lock position, in which the raise/lower valve (24) is in a locked position in which it blocks the supply line (16).

3. A vehicle suspension system (10) according to claim 1 or 2 wherein the raise/lower valve (24) has an inlet port (24a) which is connected to the source of pressurised fluid (14) via the supply line (16), an outlet port (24b) which is connected to the suspension bellows (22) via the supply line (16), an exhaust port (24c) which vents to a low pressure region, and a drive port (24d) which is connected to the suspension valve assembly (12) via a drive control line (32).

4. A vehicle suspension system (10) according to claim 3 wherein the raise/lower valve (24) includes a movable valve member assembly which, when the raise/lower valve (24) is in the raise position, connects the inlet port (24a) to the outlet port (24b), and closes the exhaust port (24c) and drive port (24d), when the raise/lower valve (24) is in the lower position, connects the outlet port (24b) to the exhaust port (24c) and closes the inlet port (24a) and drive port (24d), when the raise/lower valve (24) in the drive position connects the outlet port (24b) to the drive port (24d) and closes the exhaust port (24c) and inlet port (24a).

5. A vehicle suspension system (10) according to 3 or 4 where dependent on claim 2 wherein the raise/lower valve (24), when in the lock position, closes the inlet, outlet, exhaust and drive ports (24a, 24b, 24c, 24d).

6. A vehicle suspension system (10) according to any preceding claim wherein the system (10) further includes an electronic control unit which is connected to the suspension valve assembly (12) so that operation of the suspension valve assembly (12) may be controlled by the electronic control unit, the electronic control unit being an electronic control unit of a vehicle braking system.

7. A vehicle suspension system (10) according to any preceding claim wherein the suspension valve assembly (12) is connected to the source of pressurised fluid (14) via the supply line (16) using a branch line (34) off the supply line (16) which extends between a point in the supply line (16) between the pressurised fluid reservoir (14) and the raise/lower valve (24).

8. A vehicle suspension system (10) according to any one of claims 1 to 6 wherein the suspension valve assembly (12) is connected to a further source of pressurised fluid.

9. A vehicle suspension system (10) according to any preceding claim wherein the suspension valve assembly (12) is connected to the raise/lower valve (24) via a drive control line (32), and the suspension valve assembly (12) is configured so that in a rest position the connection between the or the further source of pressurised fluid (14) and the drive control line (32) is blocked, it moves on receipt of a first electrical operating signal to a lower position in which the drive control line (32) is vented to atmosphere, and moves on receipt of a second electrical operating signal to a raise position in which the drive control line (32) is connected to the or the further source of pressurised fluid (14).

10. A vehicle suspension system (10) according to claims 1 and 9 wherein the suspension valve assembly (12) is configured such that, on receipt of a third electrical operating signal, to move a reset position in which the pilot pressure line (30) is connected the pilot line source of pressurised fluid (14).

11. A vehicle suspension system (10) according to any preceding claim wherein the suspension valve assembly (12) includes two electrically operated valves - a fill valve (18) and an isolation valve (20).

12. A vehicle suspension system (10) according to claim 11 wherein the fill valve (18) has an exhaust port (18a) which vents to the atmosphere, an inlet port (18b) which is connected to the or the further source of pressurised fluid (14), and an outlet port (18c) which is connected to an inlet port (20a) of the isolation valve (20), the fill valve (18) being movable between a fill position in which the inlet port (18b) is connected to the outlet port (18c) whilst the exhaust port (18a) is closed, and an exhaust position in which the outlet port (18c) is connected to the exhaust port (18a) and the inlet port (18b) is closed, and the fill valve (18) is provided with a resilient biasing element (40) which biases the fill valve (18) into the exhaust position, and the fill valve (18) moves from the exhaust position to the fill position by the supply of electrical power to the fill valve (18).

13. A vehicle suspension system (10) according to claim 11 or 12 wherein the isolation valve (20) has an inlet port (20a) which is connected to the outlet port (18c) of the fill valve (18), and an outlet port (20b) which is connected to the drive control line (32), the isolation valve (20) being movable between an energised position in which the inlet port (20a) is connected to the outlet port (20b), and a stop position in which the inlet port (20a) and outlet port (20b) are both closed, and the isolation valve (20) is provided with a resilient biasing element (42) which biases the isolation valve (20) into the stop position, and the isolation valve (20) moves from the stop position to the energised position by the supply of electrical power to the isolation valve (20).

14. A vehicle suspension system (10) according to one of claims 11 to 13 wherein the pilot pressure line (30) is connected to a line extending between an outlet port (18c) of the fill valve (18) and an inlet port (20a) of the isolation valve (20).

## Patentansprüche

1. Fahrzeugaufhängungssystem (10), das Folgendes umfasst:
wenigstens einen Aufhängungsbalg (22),
eine Druckfluidquelle (14),
eine Zuführungsleitung (16), die zwischen dem Aufhängungsbalg und der Druckfluidquelle (14) über ein Heben/Senken-Ventil (24) verläuft, und
ein manuell zu betätigendes Bedienelement (26), das zwischen einer Hebeposition, einer Senkposition und einer Antriebsposition beweglich ist, wobei das Bedienelement (26) mit dem Heben/Senken-Ventil (24) verbunden ist, das so konfiguriert ist, dass, wenn das Bedienelement (26) in eine Hebeposition bewegt wird, das Heben/Senken-Ventil (24) sich in eine Hebeposition bewegt, in der der Aufhängungsbalg (22) direkt mit der Druckfluidquelle (14) verbunden ist,
wenn das Bedienelement (26) in die Senkposition bewegt wird, das Heben/Senken-Ventil (24) sich in eine Senkposition bewegt, in der der Aufhängungsbalg (22) in eine Niederdruckregion entlüftet wird, und
wenn das Bedienelement (26) in die Antriebsposition bewegt wird, das Heben/Senken-Ventil (24) sich in eine Antriebsposition bewegt, in der der Aufhängungsbalg (22) mit der oder einer weiteren Druckfluidquelle (14) über eine elektrisch betätigte Aufhängungsventilbaugruppe (12) verbunden ist,
wobei das Heben/Senken-Ventil (24) ferner mit einem fluiddruckbetätigten Stellglied (28) versehen ist, das das Heben/Senken-Ventil (24) in die Antriebsposition bewegt, wenn dem Stellglied (28) Druckfluid zugeführt wird, und
eine Steuerdruckleitung (30), mit der dem Stellglied (28) Druckfluid zugeführt wird, und **dadurch gekennzeichnet, dass** die Steuerdruckleitung (30) mit einer Steuerleitungs-Druckfluidquelle, die die Druckfluidquelle (14) oder die weitere Druckfluidquelle oder eine weitere alternative Druckfluidquelle ist, über die Aufhängungsventilbaugruppe (12) verbunden ist, wobei die Aufhängungsventilbaugruppe (12) die Aufgabe hat, Fluidstrom von der Steuerleitungs-Druckfluidquelle in die Steuerdruckleitung (30) zu steuern.

2. Fahrzeugaufhängungssystem (10) nach Anspruch 1, wobei das Bedienelement (26) auch in eine Sperrposition bewegt werden kann, in der das Heben/Senken-Ventil (24) in einer gesperrten Position ist, in der es die Zuführungsleitung (16) sperrt.

3. Fahrzeugaufhängungssystem (10) nach Anspruch 1 oder 2, wobei das Heben/Senken-Ventil (24) einen mit der Druckfluidquelle (14) über die Zuführungsleitung (16) verbundenen Einlassanschluss (24a), einen mit dem Aufhängungsbalg (22) über die Zuführungsleitung (16) verbundenen Auslassanschluss (24b), einen in eine Niederdruckregion entlüftenden Abluftanschluss (24c) und einen mit der Aufhängungsventilbaugruppe (12) über eine Antriebssteuerleitung (32) verbundenen Antriebsanschluss (24d) hat.

4. Fahrzeugaufhängungssystem (10) nach Anspruch 3, wobei das Heben/Senken-Ventil (24) eine bewegliche Ventilelementbaugruppe aufweist, die, wenn das Heben/Senken-Ventil (24) in der Hebeposition ist, den Einlassanschluss (24a) mit dem Auslassanschluss (24b) verbindet und den Abluftanschluss (24c) und den Antriebsanschluss (24d) schließt, wenn das Heben/Senken-Ventil (24) in der Senkposition ist, den Auslassanschluss (24b) mit dem Abluftanschluss (24c) verbindet und den Einlassanschluss (24a) und den Antriebsanschluss (24d) schließt, wenn das Heben/Senken-Ventil (24) in der Antriebsposition den Auslassanschluss (24b) mit dem Antriebsanschluss (24d) verbindet und den Abluftanschluss (24c) und den Einlassanschluss (24a) schließt.

5. Fahrzeugaufhängungssystem (10) nach Anspruch 3 oder 4 in Abhängigkeit von Anspruch 2, wobei das Heben/Senken-Ventil (24), wenn es in der Sperrposition ist, den Einlass-, Auslass-, Abluft- und Antriebsanschluss (24a, 24b, 24c, 24d) schließt.

6. Fahrzeugaufhängungssystem (10) nach einem vorherigen Anspruch, wobei das System (10) ferner eine elektronische Steuereinheit aufweist, die mit der Aufhängungsventilbaugruppe (12) verbunden ist, so dass eine Betätigung der Aufhängungsventilbaugruppe (12) durch die elektronische Steuereinheit gesteuert werden kann, wobei die elektronische Steuereinheit eine elektronische Steuereinheit eines Fahrzeugbremssystems ist.

7. Fahrzeugaufhängungssystem (10) nach einem vorherigen Anspruch, wobei die Aufhängungsventilbaugruppe (12) mit der Druckfluidquelle (14) über die Zuführungsleitung (16) durch eine Abzweigung (34) von der Zuführungsleitung (16) verbunden ist, die zwischen einem Punkt in der Zuführungsleitung (16) zwischen dem Druckfluidreservoir (14) und dem Heben/Senken-Ventil (24) verläuft.

8. Fahrzeugaufhängungssystem (10) nach einem der Ansprüche 1 bis 6, wobei die Aufhängungsventilbaugruppe (12) mit einer weiteren Druckfluidquelle verbunden ist.

9. Fahrzeugaufhängungssystem (10) nach einem vorherigen Anspruch, wobei die Aufhängungsventilbaugruppe (12) mit dem Heben/Senken-Ventil (24) über eine Antriebssteuerleitung (32) verbunden ist und die Aufhängungsventilbaugruppe (12) so konfiguriert ist, dass in einer Ruheposition die Verbindung zwischen der oder der weiteren Druckfluidquelle (14) und der Antriebssteuerleitung (32) gesperrt ist, sich nach Empfang eines ersten elektrischen Betätigungssignals in eine Senkposition bewegt, in der die Antriebssteuerleitung (32) in die Atmosphäre entlüftet wird, und sich nach Empfang eines zweiten elektrischen Betätigungssignals in eine Hebeposition bewegt, in der die Antriebssteuerleitung (32) mit der oder der weiteren Druckfluidquelle (14) verbunden ist.

10. Fahrzeugaufhängungssystem (10) nach den Ansprüchen 1 und 9, wobei die Aufhängungsventilbaugruppe (12) so konfiguriert ist, dass sie sich nach Empfang eines dritten elektrischen Betätigungssignals in eine Rückstellposition bewegt, in der die Steuerdruckleitung (30) mit der Steuerleitungs-Druckfluidquelle (14) verbunden ist.

11. Fahrzeugaufhängungssystem (10) nach einem vorherigen Anspruch, wobei die Aufhängungsventilbaugruppe (12) zwei elektrisch betätigte Ventile, ein Füllventil (18) und ein Trennventil (20), aufweist.

12. Fahrzeugaufhängungssystem (10) nach Anspruch 11, wobei das Füllventil (18) einen in die Atmosphäre entlüftenden Abluftanschluss (18a), einen mit der oder der weiteren Druckfluidquelle (14) verbundenen Einlassanschluss (18b) und einen mit dem Einlassanschluss (20a) des Trennventils (20) verbundenen Auslassanschluss (18c) aufweist, wobei das Füllventil (18) zwischen einer Füllposition, in der der Einlassanschluss (18b) mit dem Auslassanschluss (18c) verbunden ist, während der Abluftanschluss (18a) geschlossen ist, und einer Abluftposition beweglich ist, in der der Auslassanschluss (18c) mit dem Abluftanschluss (18a) verbunden ist und der Einlassanschluss (18b) geschlossen ist, und das Füllventil (18) mit einem elastischen Vorspannelement (40) versehen ist, das das Füllventil (18) in die Abluftposition vorspannt, und das Füllventil (18) durch Zuführen von elektrischer Leistung zum Füllventil (18) von der Abluftposition in die Füllposition bewegt wird.

13. Fahrzeugaufhängungssystem (10) nach Anspruch 11 oder 12, wobei das Trennventil (20) einen mit dem Auslassanschluss (18c) des Füllventils (18) verbundenen Einlassanschluss (20a) und einen mit der Antriebssteuerleitung (32) verbundenen Auslassanschluss (20b) hat, wobei das Trennventil (20) zwischen einer angeregten Position, in der der Einlassanschluss (20a) mit dem Auslassanschluss (20b) verbunden ist, und einer Stoppposition beweglich ist, in der der Einlassanschluss (20a) und der Auslassanschluss (20b) beide geschlossen sind, und das Trennventil (20) mit einem elastischen Vorspannelement (42) versehen ist, das das Trennventil (20) in die Stoppposition vorspannt, und das Trennventil (20) sich durch Zufuhr von elektrischer Leistung zum Trennventil (20) von der Stoppposition in die angeregte Position bewegt.

14. Fahrzeugaufhängungssystem (10) nach einem der Ansprüche 11 bis 13, wobei die Steuerdruckleitung (30) mit einer zwischen einem Auslassanschluss (18c) des Füllventils (18) und einem Einlassanschluss (20a) des Trennventils (20) verlaufenden Leitung verbunden ist.

## Revendications

1. Système de suspension de véhicule (10) comprenant :
un ou plusieurs soufflets de suspension (22),
une source de fluide sous pression (14),
une conduite d'alimentation (16) qui s'étend entre les soufflets de suspension et la source de fluide sous pression (14) via une soupape d'élévation/abaissement (24), et
un élément d'actionnement actionnable manuellement (26) qui peut être déplacé entre une position d'élévation, une position d'abaissement et une position d'entraînement,
l'élément d'actionnement (26) étant relié à la soupape d'élévation/abaissement (24) qui est configurée de telle sorte que quand l'élément d'actionnement (26) est déplacé à la position d'élévation, la soupape d'élévation/abaissement (24) se déplace à une position d'élévation à laquelle les soufflets de suspension (22) sont reliés directement à la source de fluide sous pression (14),
quand l'élément d'actionnement (26) est déplacé à la position d'abaissement, la soupape d'élévation/abaissement (24) se déplace à une position d'abaissement à laquelle les soufflets de suspension (22) sont évacués vers une région de basse pression, et
quand l'élément d'actionnement (26) est déplacé à la position d'entraînement, la soupape d'élévation/abaissement (24) se déplace à une position d'entraînement à laquelle les soufflets de suspension (22) sont reliés à la source de fluide sous pression ou une autre source (14) via un ensemble soupape de suspension actionné électriquement (12),
dans lequel la soupape d'élévation/abaissement (24) est munie en outre d'un actionneur actionné par une pression de fluide (28) qui déplace la soupape d'élévation/abaissement (24) à la position d'entraînement quand le fluide sous pression est fourni à l'actionneur (28), et
une conduite de pression pilote (30) au moyen duquel un fluide sous pression est fourni à l'actionneur (28) et **caractérisé en ce que** la conduite de pression pilote (30) est reliée à une source de fluide sous pression de conduite pilote, qui est soit la source de fluide sous pression (14), soit une autre source de fluide sous pression, soit une autre source de fluide sous pression alternative, via l'ensemble soupape de suspension (12), l'ensemble soupape de suspension (12) pouvant être actionné pour commander le flux de fluide allant de la source de fluide sous pression de conduite pilote dans la conduite de pression pilote (30).

2. Système de suspension de véhicule (10) selon la revendication 1, dans lequel l'élément d'actionnement (26) peut aussi être déplacé à une position de verrouillage, dans laquelle la soupape d'élévation/abaissement (24) est à une position verrouillée dans laquelle elle bloque la conduite d'alimentation (16).

3. Système de suspension de véhicule (10) selon la revendication 1 ou 2, dans lequel la soupape d'élévation/abaissement (24) a un orifice d'entrée (24a) qui est relié à la source de fluide sous pression (14) via la conduite d'alimentation (16), un orifice de sortie (24b) qui est relié aux soufflets de suspension (22) via la conduite d'alimentation (16), un orifice d'évacuation (24c) qui évacue vers une région de basse pression, et un orifice d'entraînement (24d) qui est relié à l'ensemble soupape de suspension (12) via une conduite de commande d'entraînement (32).

4. Système de suspension de véhicule (10) selon la revendication 3, dans lequel la soupape d'élévation/abaissement (24) inclut un ensemble élément de soupape mobile qui, quand la soupape d'élévation/abaissement (24) est à la position d'élévation, relie l'orifice d'entrée (24a) à l'orifice de sortie (24b), et ferme l'orifice d'évacuation (24c) et l'orifice d'entraînement (24d), quand la soupape d'élévation/abaissement (24) est à la position d'abaissement, relie l'orifice de sortie (24b) à l'orifice d'évacuation (24c) et ferme l'orifice d'entrée (24a) et l'orifice d'entraînement (24d), quand la soupape d'élévation/abaissement (24) à la position d'entraînement relie l'orifice de sortie (24b) à l'orifice d'entraînement (24d) et ferme l'orifice d'évacuation (24c) et l'orifice d'entrée (24a).

5. Système de suspension de véhicule (10) selon 3 ou 4 en fonction de la revendication 2, dans lequel la soupape d'élévation/abaissement (24), quand elle est à la position de verrouillage, ferme les orifices d'entrée, de sortie, d'évacuation et d'entraînement (24a, 24b, 24c, 24d).

6. Système de suspension de véhicule (10) selon l'une quelconque des revendications précédentes, dans lequel le système inclut en outre une unité de commande électronique qui est reliée à l'ensemble soupape de suspension (12) de telle sorte que l'actionnement de l'ensemble soupape de suspension (12) peut être commandé par l'unité de commande électronique, l'unité de commande électronique étant une unité de commande électronique d'un système de freinage de véhicule.

7. Système de suspension de véhicule (10) selon l'une quelconque des revendications précédentes, dans lequel l'ensemble soupape de suspension (12) est relié à la source de fluide sous pression (14) via la conduite d'alimentation (16) en utilisant une conduite de dérivation (34) partant de la conduite d'alimentation (16) qui s'étend entre un point dans la conduite d'alimentation (16) entre le réservoir de fluide sous pression (14) et la soupape d'élévation/abaissement (24).

8. Système de suspension de véhicule (10) selon l'une quelconque des revendications 1 à 6, dans lequel l'ensemble soupape de suspension (12) est relié à une autre source de fluide sous pression.

9. Système de suspension de véhicule (10) selon l'une quelconque des revendications précédentes, dans lequel l'ensemble soupape de suspension (12) est relié à la soupape d'élévation/abaissement (24) via une conduite de commande d'entraînement (32), et l'ensemble soupape de suspension (12) est configuré de telle sorte qu'à une position de repos, la liaison entre la source de fluide sous pression ou l'autre source (14) et la conduite de commande d'entraînement (32) est bloquée, il se déplace à la réception d'un premier signal de fonctionnement électrique à une position d'abaissement à laquelle la conduite de commande d'entraînement (32) est évacuée vers l'atmosphère, et se déplace à la réception d'un deuxième signal de fonctionnement électrique à une position d'élévation dans laquelle la conduite de commande d'entraînement (32) est reliée à la source de fluide sous pression ou l'autre source (14).

10. Système de suspension de véhicule (10) selon les revendications 1 et 9, dans lequel l'ensemble soupape de suspension (12) est configuré afin de, à la réception d'un troisième signal de fonctionnement électrique, se déplacer d'une position de réarmement à laquelle la conduite de pression pilote (30) est reliée à la source de fluide sous pression de conduite pilote (14).

11. Système de suspension de véhicule (10) selon l'une quelconque des revendications précédentes, dans lequel l'ensemble soupape de suspension (12) inclut deux soupapes actionnées électriquement - une soupape de remplissage (18) et une soupape d'isolement (20).

12. Système de suspension de véhicule (10) selon la revendication 11, dans lequel la soupape de remplissage (18) a un orifice d'évacuation (18a) qui évacue vers l'atmosphère, un orifice d'entrée (18b) qui est relié à la source de fluide sous pression ou l'autre source (14), et un orifice de sortie (18c) qui est relié à un orifice d'entrée (20a) de la soupape d'isolement (20), la soupape de remplissage (18) pouvant être déplacée entre une position de remplissage à laquelle l'orifice d'entrée (18b) est relié à l'orifice de sortie (18c) tandis que l'orifice d'évacuation (18a) est fermé, et une position d'évacuation dans laquelle l'orifice de sortie (18c) est relié à l'orifice d'évacuation (18a) et l'orifice d'entrée (18b) est fermé, et la soupape de remplissage (18) est munie d'un élément de poussée élastique (40) qui pousse la soupape de remplissage (18) à la position d'évacuation, et la soupape de remplissage (18) se déplace de la position d'évacuation à la position de remplissage par l'alimentation en courant électrique à la soupape de remplissage (18).

13. Système de suspension de véhicule (10) selon la revendication 11 ou 12, dans lequel la soupape d'isolement (20) a un orifice d'entrée (20a) qui est relié à l'orifice de sortie (18c) de la soupape de remplissage (18), et un orifice de sortie (20b) qui est relié à la conduite de commande d'entraînement (32), la soupape d'isolement (20) pouvant être déplacée entre une position sous tension à laquelle l'orifice d'entrée (20a) est relié à l'orifice de sortie (20b), et une position d'arrêt à laquelle l'orifice d'entrée (20a) et l'orifice de sortie (20b) sont tous deux fermés, et la soupape d'isolement (20) est munie d'un élément de poussée élastique (42) qui pousse la soupape d'isolement (20) à la position d'arrêt, et la soupape d'isolement (20) se déplace de la position d'arrêt à la position sous tension par l'alimentation en courant électrique à la soupape d'isolement (20).

14. Système de suspension de véhicule (10) selon l'une quelconque des revendications 11 à 13, dans lequel la conduite de pression pilote (30) est reliée à une conduite s'étendant entre un orifice de sortie (18c) de la soupape de remplissage (18) et un orifice d'entrée (20a) de la soupape d'isolement (20).
